# EUROPEAN PATENT APPLICATION

(11) **EP 2 187 585 A1**
(43) Date of publication of application: **19.05.2010**
(21) Application number: 08800919.6
(22) Date of filing: 19.09.2008
(51) Int. Cl.: H04L 12/58, G06F 17/30

(54) **METHOD, SYSTEM AND DEVICE FOR DETERMINING USER DATA**

(30) Priority: 12.10.2007 CN 200710151430
(71) Applicant: Huawei Technologies Co., Ltd., Longgang District, Shenzhen Guangdong 518129 (CN)
(72) Inventor: FU, Pei, Shenzhen 518129 (CN); SHAO, Gang, Shenzhen 518129 (CN); TAN, Yinyan, Shenzhen 518129 (CN)
(74) Representative: Kreuz, Georg Maria
(86) International application number: PCT/CN2008/072425
(87) International publication number: WO 2009/049517

(57) **Abstract**

A method for determining user data is provided. The method includes: receiving an access request message carrying a user identity (ID) sent by a service server; searching corresponding user state information according to the user ID; selecting corresponding user data according to the searched user state information. Meanwhile, a system and a device for determining user data are provided.

## Description

### FIELD OF THE TECHNOLOGY

The present invention relates to the field of network communication technology, and more particularly to a method, a system, and a device for determining user data.

### BACKGROUND OF THE INVENTION

In an existing communication network, as the number of mobile phone users increases, more and more services have been developed. Among the services, some services are customized by the mobile phone users, but others are not required by the users.

Recently, in order to enable a mobile phone user to only receive the required services, the mobile phone user is allowed to set user data. When the network side intends to send a service to the mobile phone user, the network side needs to view the user data set by the mobile phone user, so as to perform a corresponding operation, for example, to determine whether to provide the service for the user.

In the extensible Markup Language (XML) Document Management (XDM) specifications developed by the International Standard Organization Open Mobile Alliance (OMA) and a series of user data relevant specifications, it is specified that the user data is stored in an XML Document Management Server (XDMS) in an XML format. When the user data or elements in the user data are accessed, a Uniform Resource Identifier (URI) of the corresponding access object needs to be constructed according to the XDM specifications, and the user data is accessed through a Hyper Text Transport Protocol (HTTP).

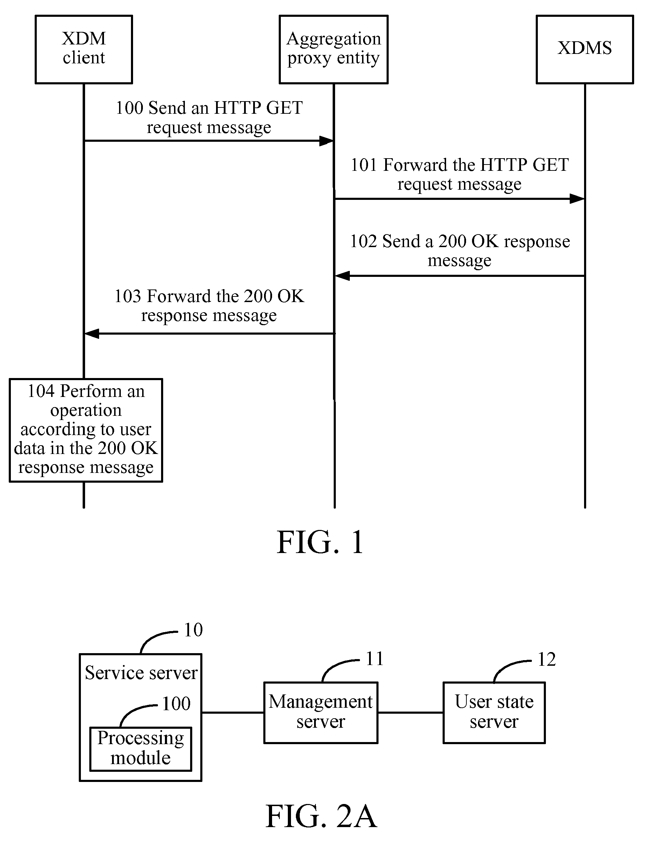

Referring to FIG. 1, a method for accessing user data based on XDM specifications in the prior art includes the following steps.

In Step 100, when having a service, an XDM client constructs a URI of the user data, carries the URI in an HTTP request message, and sends the HTTP request message to an aggregation proxy entity.

In Step 101, the aggregation proxy entity forwards the HTTP GET request message to a corresponding XDMS according to a uniform identifier (AUID).

In Step 102, after completing authentication according to the HTTP GET request message, the XDMS sends a 200 OK response message to the aggregation proxy entity, and carries the user data required by the request message in the response message.

In Step 103, the aggregation proxy entity forwards the 200 OK response message to the XDM client.

In Step 104, the XDM client performs an operation according to the user data in the 200 OK response message.

The prior art has the following problems

Currently, the user data is unchanged, and is changed only when the user data is modified. If the user intends to not receive any service when he or she is on duty, and intends to receive the customized services when he or she is off duty, the idea cannot be realized through the existing user data access framework.

To sum up, in the current user data access framework, the user data cannot be adapted to the demands of the user in different states.

### SUMMARY OF THE INVENTION

The present invention is directed to a method, a system, and a device for determining user data, which are capable of satisfying demands of a user in different states in a user data access framework, thereby improving user experience.

As a first aspect, the present invention provides a method for determining user data, which includes the following steps:
receiving an access request message carrying a user identity, ID, sent by a service server;
searching for corresponding user state information according to the user ID; and
selecting corresponding user data according to the searched user state information.

As a second aspect, the present invention provides a system for determining user data, which includes a service server, and further includes:
a management server, adapted to receive an access request message carrying a user ID sent by the service server, search for corresponding user state information according to the user ID, and select corresponding user data according to the searched user state information.

As a third aspect, the present invention provides a system for determining user data, which includes a service server, and further includes:
an aggregation proxy entity, adapted to receive an access request message carrying a user ID sent by the service server; and
a mapping proxy entity, adapted to search for corresponding user state information according to the user ID, and select corresponding user data according to the searched user state information.

As a fourth aspect, the present invention provides a management server, which includes:
a receiving module, adapted to receive an access request message carrying a user ID sent by a service server;
a searching module, adapted to search for corresponding user state information according to the user ID; and
a selecting module, adapted to select corresponding user data according to the user state information searched by the searching module.

Compared with the prior art, in the present invention, the access request message carrying the user ID sent by the service server is received, the corresponding user state information is searched according to the user ID, and the corresponding user data is selected according to the searched user state information, so as to satisfy the demands of the user in the different states.

### BRIEF DESCRIPTION OF THE DRAWINGS

FIG. 1 is a schematic flow chart of a method for accessing user data based on XDM specifications in the prior art;
FIG. 2A is a schematic structural view of a first system for determining user data according to an embodiment of the present invention;
FIG. 2B is a schematic structural view of a second system for determining user data according to an embodiment of the present invention;
FIG. 2C is a schematic structural view of a management server according to an embodiment of the present invention;
FIG. 3A is a schematic flow chart of a first method for determining user data according to an embodiment of the present invention;
FIG. 3B is a schematic flow chart of a second method for determining user data according to an embodiment of the present invention;
FIG. 3C is a schematic flow chart of a third method for determining user data according to an embodiment of the present invention; and
FIG. 3D is a schematic flow chart of a fourth method for determining user data according to an embodiment of the present invention.

### DETAILED DESCRIPTION OF THE EMBODIMENTS

The present invention is further described in detail with reference to the accompanying drawings.

Referring to FIG. 2A, a first system for determining user data according to an embodiment of the present invention includes a service server 10 and a management server 11.

The service server 10 is adapted to send an access request message carrying a user ID to the management server 11.

In this embodiment, the service server 10 may carry an uniform identifier (AUID) and a file path in the access request message.

The access request message may be an Hyper Text Transport Protocol (HTTP) request containing a Uniform Resource Identifier (URI).

The service server 10 further includes a processing module 100.

The processing module 100 is adapted to perform an operation according to the user data selected by the management server 11.

The operation of the service server 10 includes but is not limited to one of the following.

The service server 10 determines whether to provide a service for a user, and whether to send a message to the user.

For example, if the user data is to reject advertisement information, the service server 10 determines whether the service provided for the user is the advertisement information; if the service provided for the user is the advertisement information, the service server 10 does not provide the service information for the user; otherwise, the service server 10 provides the service information for the user.

The management server 11 is adapted to receive the access request message carrying the user ID sent by the service server 10, search for corresponding user state information according to the user ID, and select corresponding user data according to the searched user state information.

The first system for determining the user data according to the embodiment of the present invention further includes a user state server 12.

The user state server 12 is adapted to switch the user state information when a preset switching condition is satisfied, or switch the user state information according to received user switching information.

The management server 11 searches for the corresponding user state information through the user state server 12.

The switching condition includes but is not limited to one or more of the following: a time condition, presence information, location information, and state information.

The user switching information at least includes the user ID and a switch state.

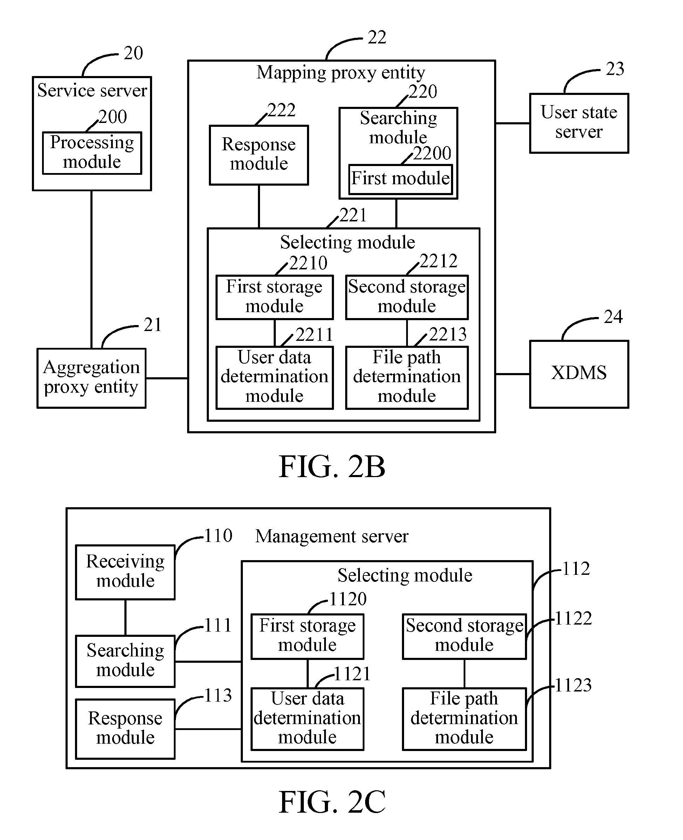

Referring to FIG. 2B, a second system for determining user data according to an embodiment of the present invention includes a service server 20, an aggregation proxy entity 21, and a mapping proxy entity 22.

The service server 20 is adapted to send an access request message carrying a user ID to the aggregation proxy entity 21.

In this embodiment, the service server may carry an AUID and a file path in the access request message.

The access request message may be an HTTP request containing a URI.

The service server 20 further includes a processing module 200.

The processing module 200 is adapted to perform an operation according to the user data selected by the mapping proxy entity 22.

The operation of the service server 20 includes but is not limited to one of the following.

The service server 20 determines whether to provide a service for a user, and whether to send a message to the user.

For example, if the user data is to reject the advertisement information, the service server 20 determines whether the service provided for the user is the advertisement information; if the service provided for the user is the advertisement, the service server 20 does not provide the service information for the user; otherwise, the service server 20 provides the service information for the user.

The aggregation proxy entity 21 is adapted to receive the access request message carrying the user ID sent by the service server 20.

The mapping proxy entity 22 is adapted to search for corresponding user state information according to the user ID in the access request message received by the aggregation proxy entity 21, and select corresponding user data according to the searched user state information.

The mapping proxy entity 22 further includes a searching module 220 and a selecting module 221.

The searching module 220 is adapted to search for the corresponding user state information according to the user ID in the access request message received by the aggregation proxy entity 21.

The selecting module 221 is adapted to select the corresponding user data according to the user state information searched by the searching module 220.

The mapping proxy entity 22 further includes a response module 222.

The response module 222 is adapted to send a response message carrying the user data selected by the selecting module 221 to the service server 20.

The second system for determining the user data according to the embodiment of the present invention further includes a user state server 23.

The user state server 23 is adapted to switch the user state information when a preset switching condition is satisfied, or switch the user state information according to the received user switching information.

The user switching information at least includes the user ID and a switch state.

The searching module 220 further includes a first module 2200.

The first module 2200 is adapted to search for the corresponding user state information through the user state server 23.

The information stored in the user state server at least includes all the possible user state information description and the user current state ID, and the detailed content is as shown in Table 1.

**Table 1 Storage structure of the user state**

| |
|---|
| <user-status> |
| <active-status>home</active-status> |
| <status id="home"> |
| <status-description>relax me</status-description> |
| </status> |
| <status id="work"> |
| <status-description>less interruption</status-description> |
| </status> |
| </user-status> |

The switching condition includes but is not limited to one or more of the following: a time condition, presence information, location information, and state information.

The presence information is from a presence server, and the location information is from a location server.

When the switching condition includes a combination of the time condition, the presence information, the user location, and other conditions, a relation between the conditions may be "and" or "or", that is, if the relation is "and", if and only if all the conditions are true, the state condition is true, and if the relation is "or", when one of the state conditions is true, the state condition is true.

Apiece of user state information may be corresponding to one or more state conditions.

Definitely, the state condition may include a default state ID, representing that the state is a default state, that is, when no state condition corresponding to the state is true, automatic switch to the default state is performed (or the default state is maintained).

An example is described as follows.

The time condition may be represented by starting time and ending time. That is, if the current time is within a set time period, the time condition is true. The time condition may use absolute time, representing that the time starts from a certain hour of a certain month of a certain year and ends at a certain hour, or use a relative time, representing that the time starts from a certain hour of each day and ends at a certain hour of the day. For example, the time condition of an operating state starting from 9 o'clock and ending at 18 o'clock each day is as shown in Table 2.

**Table 2 Time condition of operating state**

| |
|---|
| <time-condition type="everyday"> |
| <from>9:00Z</from> |
| <to> 18:30Z</to> |
| </time-condition > |

Apparently, the time condition may be represented in many other ways, for example, a certain time period of each day of workdays (from Monday to Friday), and the detailed implementation is similar to that shown in Table 2, so will not be described again here.

The presence information is the user information from the presence server. A plurality of pieces of presence information may exist, and the relation among the plurality of pieces of presence information is "and", that is, the condition is true only when all the presence information in the condition is the defined value.

For example, the presence information condition "instant message (IM) state is busy" is as shown in Table 3.

**Table 3 IM state**

| |
|---|
| <presence-condition> |
| <presence-info entity="sip: michael@example.com" |
| xpath="/pidf:presence/pidf:tuple/pidf: status/im:im" > |
| busy |
| </presence-info> |
| <presence-info entity="sip: mark@example.com" |
| xpath="/pidf:presence/pidf:tuple/pidf: status/im:im" > |
| busy |
| </presence-info> |
| </presence-condition> |

In Table 3, "entity" represents "a sip uri of a presentity", "xpath" indicates the specific presence information required by the condition, and the value of the "presence-info" element represents the necessary value of the specific presence information to make the presence condition true.

Definitely, an Instant Message (IM) is only one type of the accessible presence information in the presence server. The presence server has many pieces of presence information, and other presence information may also be used with this embodiment.

The location information represents whether a designated user is in a specific region. The region condition includes one or more pieces of region information. The relation among the region information is "and", that is, only when the conditions represented by all the region information are satisfied, the region condition formed by the region information is true. The location information at least includes the user ID and a geographic region. The location information represents that the region information is satisfied when the user represented by the user ID is located in the geographic region. The location information includes an attribute relative, and has two values of inside and outside. When the relative is inside, it represents that when the user is in the geographic region, the region information is satisfied. When the relative is outside, it represents that when the user is not in the region, the region information is satisfied.

For example, the location information "a user having the number 461011678298 is in a region centered at latitude 35°35'24.139" north and longitude 139°35'24.754" east and with a radius of 500 meters, and a user having the number 461011678299 is in Seoul" is as shown in Table 4.

**Table 4 Representation of location information**

| |
|---|
| <location-condition> |
| <location-info relative"inside"> |
| <msid>461011678298</msid> |
| <area> |
| <shape> |
| <CircularArea srsName="www.epsg.org#4326"> |
| <coord> |
| <X>35 35 24.139N</X> |
| <Y>139 35 24.754E</Y> |
| </coord> |
| <radius>500</radius> |
| </CircularArea> |
| </shape> |
| </area> |
| </location-info > |
| <location-info relative="outside"> |
| <msid>461011678299</msid> |
| <area> |
| <name_area>Seoul</name_area> |
| </area> |
| </location-info> |
| </location-condition> |

Table 5 shows the user state information including all the condition information.

**Table 5 Representation of the switching condition including the time information, presence information, and location information**

| |
|---|
| <user-status> |
| <user uri="sip: michael@example.com"> |
| <active-status>home</active-status> |
| <status id="home" default="yes"> |
| <status-description>relax me</status-description> |
| <condition> |
| <time-condition type="everyday"> |
| ...... |
| </time-condition > |
| <presence-condition> |
| ...... |
| </presence-condition> |
| <location-condition> |
| ...... |
| </location-condition> |
| <condition> |
| </status> |
| <status id="work"> |
| <status-description>less interruption</status-description> |
| <condition> |
| <time-condition type="everyday"> |
| ...... |
| </time-condition > |
| <presence-condition> |
| ...... |
| </presence-condition> |
| <location-condition> |
| ...... |
| </location-condition> |
| <condition> |
| </status> |
| </user > |
| ...... |
| </user-status> |

In Table 5, the relation among the time information, the presence information, and the location information is "and". If the relation is "or", the representation is similar to that shown in Table 5, and will not described again here.

The user has a default state "home".

The user state server can store a corresponding relation between the user state information and the user data.

Specifically, if a second corresponding relation between the user state information and the file path is stored, the user state server is implemented based on XDM specifications, and a received query request includes an AUID, a user ID (XLJI), and a file path.

The user state server adopts a hierarchical storage mode. For example, as shown in Table 5, a "user" element includes an "application" element, and the "application" element includes a "filemapping" element. The "user" element includes the user designated according to the uri attribute ID, the "application" element includes the "auid" ID service, the "filemapping" includes "basicfile", that is, a name (or path) of the file to be mapped.

**Table 6 Storage mode of user state server**

| |
|---|
| <user-status> |
| <user uri=""> |
| <active-status>home</active-status> |
| <status id="home"> |
| <status-description>relax me</status-description> |
| <mapping> |
| <application auid="A"> |
| <filemapping basicfile=" fileA1 "> |
| fileA1-home |
| </filemapping> |
| </applicaiton> |
| <application auid="B"> |
| <filemapping basicfile=" fileB1"> |
| fileB1-home |
| </filemapping> |
| </applicaiton> |
| </mapping> |
| ...... |
| </status> |
| <status id="work"> |
| <status-description>work hard</status-description> |
| <mapping> |
| <application auid="A"> |
| <filemapping basicfile" fileA1 "> |
| fileA1-work |
| </filemapping> |
| </applicaiton> |
| <application auid="B"> |
| <filemapping basicfile" fileB1"> |
| fileB1-work |
| </filemapping> |
| </applicaiton> |
| </mapping> |
| ...... |
| </status> |
| </user> |
| </user-status> |

When the user state server switches the user state information according to the user switching information, the detailed steps are described in the following.

After receiving the user switching information, the user state server determines the corresponding user according to the user ID in the state information, and switches the user state information according to the switch state in the state information.

The state switching information may be sent to the user state server through the HTTP protocol, the Session Initiation Protocol (SIP), or other manners.

The IDs and the switching conditions of all the states in the user state server may be stored in the state storage XDMS, such that after receiving the user switching information, the user state server modifies the user state information through the XML Configuration Access Protocol (XCAP).

The state storage XDMS may be independent from the user state server, or may be in the user state server.

The message sent by the user state server to the state storage XDMS is as shown in Table 7.

**Table 7 Content of the message sent by the user state server in a manual mode**

| |
|---|
| PUT http://userstatus.example.com/user-status/users/sip:michael@ |
| example.com/ |
| ustatusl/user-status /active-status HTTP/1.1 |
| Content-Type: application/xcap-el+xml |
| <active-status>home</active-status> |

When the user state switching mode is automatic switching, the user state server switches the user state information when the preset switching condition is satisfied.

If the user state information, the IDs and the switching conditions of all the states in the user state server are stored in the state storage XDMS, the user state server sends a request through the XCAP protocol to obtain the user state information and the corresponding switching conditions in the state storage XDMS, as shown in Table 8.

**Table 8 Content of the message sent by the user state server in an automatic mode**

| |
|---|
| GET http://userstatus.example.com/user-status/users/sip:michael@ |
| exmaple.com/ |
| ustatusl/user-status HTTP/1.1 |

The user state server queries whether the user state satisfies the switching condition through the presence server and/or location server.

Specifically, the user state server may subscribe to only the presence information or the location information within a time range according to the time condition in the state condition, so as to reduce the calculation amount of the user state server and the sending amount of the useless presence information or location information.

For the subscription of the presence information, the user state server sends a subscription message to the presence server when a certain time condition is satisfied. The message includes an expiration time field "Expires" for setting a duration of the time condition. For the location information, the user state server sends a request message when the time period defined by the time condition starts, so as to subscribe to the location information corresponding to the time condition, and sends a stop message when the time period ends, so as to stop the undesired subscription.

When the presence information is subscribed to from the presence server, it is possible to subscribe to only the presence information corresponding to the currently true time condition instead of the entire presence information of the user. Specifically, a defined filter set may be used in a message body sent to the presence server.

For the time condition, the user state server converts the time condition to the absolute time according to a type label of the time condition. For example, the absolute time converted from the time condition of a certain state obtained from the state storage XDMS is as shown in Table 9.

**Table 9 Content after conversion by the user state server**

| |
|---|
| <from>2007-08-27T9:00Z</from> |
| <to>2007-08-27T 18:30Z</to> |

If the state condition does not include the time condition, when the relevant message is subscribed to, the time range is not used.

When the subscribed information received by the user state server is changed, or satisfies the time condition in the state condition, the user state server determines whether the presence information and the location information sent by the presence server and/or the location server satisfy the switching condition according to the local time.

If the current time reaches the end time of the set time condition, the switching condition corresponding to the time condition is marked not true. If one or more switching conditions are true, the switching condition is marked true.

Further, when the received subscribed information is changed, it is only necessary to calculate whether the switching conditions relevant to the information are true.

The second system for determining the user data according to the embodiment of the present invention further includes an XML Document Management Server (XDMS) 24.

The XDMS 24 is adapted to store the user data.

The selecting module 221 further includes a first storage module 2210 and a user data determination module 2211.

The first storage module 2210 is adapted to store a first corresponding relation between the user state information and the user data.

The user data determination module 2211 is adapted to select the user data corresponding to the user state information searched by the searching module 220 from the XDMS 24 according to the first corresponding relation stored in the first storage module 2210.

The selecting module 221 further includes a second storage module 2212 and a file path determination module 2213.

The second storage module 2212 is adapted to store a second corresponding relation between the user state information and a file path.

The file path determination module 2213 is adapted to search for the file path corresponding to the user state information searched by the searching module 220 according to the second corresponding relation stored in the second storage module 2212, and select the user data corresponding to the file path from the XDMS 24.

In the embodiment of the present invention, the mapping proxy entity 22 may be disposed in the aggregation proxy entity 21 or the XDMS 24.

Referring to FIG. 2C, a structure of a management server 11 according to an embodiment of the present invention includes a receiving module 110, a searching module 111, and a selecting module 112.

The receiving module 110 is adapted to receive an access request message carrying the user ID sent by a service server.

The searching module 111 is adapted to search for corresponding user state information according to the user ID in the access request message received by the receiving module 110.

The selecting module 112 is adapted to select corresponding user data according to the user state information searched by the searching module 111.

The selecting module 112 further includes a first storage module 1120 and a user data determination module 1121.

The first storage module 1120 is adapted to store a first corresponding relation between the user state information and the user data.

The user data determination module 1121 is adapted to select the user data corresponding to the user state information searched by the searching module 111 according to the first corresponding relation stored in the first storage module 1120.

The selecting module 112 further includes a second storage module 1122 and a file path determination module 1123.

The second storage module 1122 is adapted to store a second corresponding relation between the user state information and a file path.

The file path determination module 1123 is adapted to search for the file path corresponding to the user state information searched by the searching module 111 according to the second corresponding relation stored in the second storage module 1122, and select the user data corresponding to the file path.

The management server 11 further includes a response module 113.

The response module 113 is adapted to send a response message carrying the user data selected by the selecting module 112 to the service server.

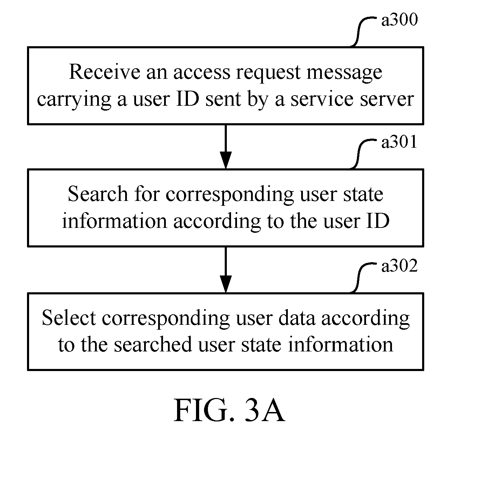

Referring to FIG. 3A, a first method for determining user data according to an embodiment of the present invention includes the following steps.

In Step a300, an access request message carrying a user ID sent by a service server is received.

In Step a301, corresponding user state information is searched according to the user ID.

In Step a302, corresponding user data is selected according to the searched user state information.

After Step a302, the method may further include the following.

A response message carrying the determined user data is sent to the service server.

After Step a302, the method may further include the following.

The service server performs an operation according to the selected user data.

The operation of the service server includes but is not limited to one of the following.

The service server determines whether to provide a service for a user, and whether to send a message to the user.

For example, if the user data is to reject advertisement information, the service server determines whether the service provided for the user is the advertisement information; if the service provided for the user is the advertisement information, the service server does not provide the service information for the user; otherwise, the service server provides the service information for the user.

The first method for determining the user data further includes the following.

The user state information is switched when a preset switching condition is satisfied, or the user state information is switched according to the received user switching information.

Step a302 may further include the following.

The user data corresponding to the user state information is selected according to a preset corresponding relation between the user state information and the user data.

Alternatively, a file path corresponding to the user state information is searched according to a preset corresponding relation between the user state information and the file path, and the user data corresponding to the file path is selected.

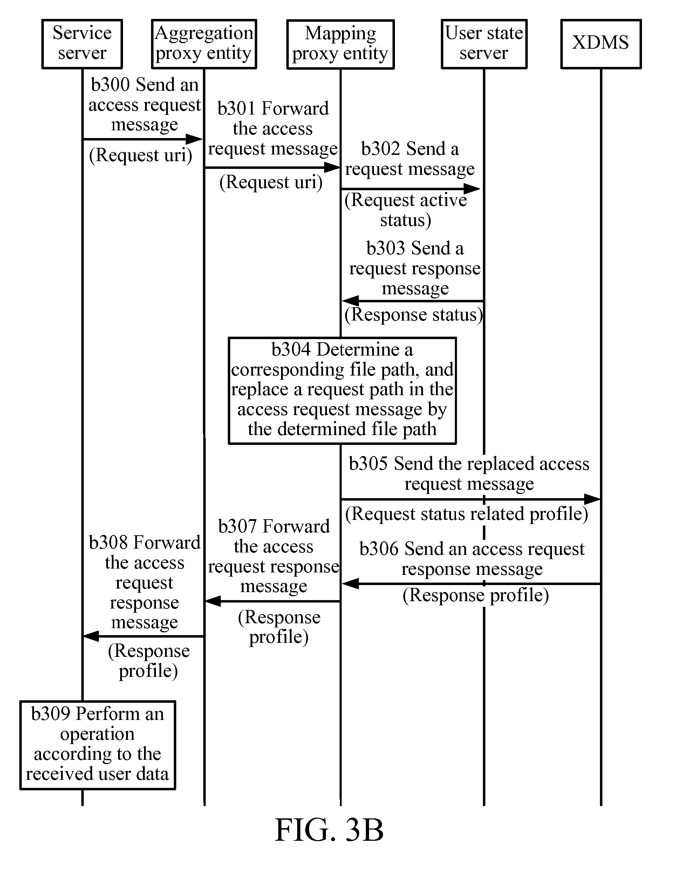

The first method for determining the user data may be implemented by using an aggregation proxy entity, a mapping proxy entity, an XDMS, or a user state server. The detailed process is as shown in FIG. 3B.

Referring to FIG. 3B, a second method for determining the user data according to an embodiment of the present invention includes the following steps.

A corresponding relation between user state information and a file path is preset, and stored in a mapping proxy entity. User data is stored in an XDMS.

In Step b300, a service server sends an access request message containing a user ID, an AUID, and a request path to the mapping proxy entity.

The request includes a display ID (that is, a special field) indicating that the request message is processed by the mapping proxy entity, for example, a path segment (current) is added before AUID in the request, so as to be differentiated from other request messages, http://[XCAP Root URI]/current/[AUID], or the request message is directly sent to the mapping proxy entity according to the AUID.

The access request message sent by the service server is as shown in Table 10.

**Table 10 Access request message sent by the service server**

| |
|---|
| GET http://xcap.example.com/ current /pres-rules/users/sip:Michael@ |
| example.com/ |
| ruleset HTTP/1.1 |
| ... |
| Content-Length:0 |

In Step b301, after receiving the access request message, the aggregation proxy entity sends the message to the mapping proxy entity according to the display ID in the message.

In Step b302, after receiving the access request message, the mapping proxy entity sends a request message containing the user ID to the user state server.

In Step b303, after receiving the request message, the user state server determines the user state information corresponding to the user ID in the request message, and returns the user state information to the mapping proxy entity.

In Step b304, the mapping proxy entity determines the corresponding file path according to the corresponding relation between the user state information and the file path, and replaces the request path in the access request message by the determined file path.

If the user state server stores the corresponding relation between the user state information and the file path, in Step b303, the user state server sends the determined file path to the mapping proxy entity, and in Step b304, the mapping proxy entity directly replaces the request path in the access request message by the received file path.

In Step b305, the mapping proxy entity sends the replaced access request message to the XDMS.

The access request message sent by the mapping proxy entity is as shown in Table 11.

**Table 11 Access request message sent by the mapping proxy entity**

| |
|---|
| GET http://xcap.example.com/current/pres-rules/users/sip:Michael@ |
| example.com/ruleset -home |
| HTTP/1.1 |
| ... |
| Content-Length:0 |

In Step b306-Step b308, after receiving the access request message, the XDMS determines the corresponding user data according to the request path in the message, and sends the user data to the service server through the mapping proxy entity and the aggregation proxy entity.

The XDMS stores a plurality of files identified by actual filenames, so as to represent duplicates of the user data identified by one basic filename in different user states. Each actually stored file stores the user data. For example, for a service A, the user data of a user U is "rule_set". When the user state is "home", the corresponding actual filename is "rule_set_home". When the user state is "work", the corresponding actual filename is "rule_set_work". The two files are corresponding to the same access filename "rule_set".

A storage structure of the XDMS is as shown in Table 12.

**Table 12 Storage structure of the XDMS**

| |
|---|
| <?xm1 version="1.0" encoding="UTF-8"?> |
| <cr:ruleset xmlns="um:ietf:params:xml:ns:pres-rules" |
| xmlns:pr="um:ietf.params:xml:ns:pres-rules" |
| xmlns:cr="urn: ietf:params:xml:ns:common-policy"> |
| <cr:rule id="a"> |
| <cr:conditions> |
| <cr:identity> |
| <cr:one id="sip:Linda@example.com"/> |
| </cr:identity> |
| </cr:conditions> |
| <cr:actions> |
| <pr: sub-handling>allow</pr: sub-handling> |
| </cr:actions> |
| <cr:transformations> |
| ...... |
| </craransformations> |
| </cr:rule> |
| <cr:rule id="b"> |
| <cr:conditions> |
| <cr:identity> |
| <cr:one id="sip:Paul@example.com"/> |
| </cr:identity> |
| </cr:conditions> |
| <cr:actions> |
| <pr: sub-handling>allow</pr: sub-handling> |
| </cr:actions> |
| <cr:transformations> |
| ...... |
| </cr:transformations> |
| </cr:rule> |
| </cr:ruleset> |

In Table 12, a storage structure of the file in the information of the user data of a user Michael has a plurality of files, for example, the actual filenames corresponding to the user data file A1 in the states "home" and "work" are respectively "fileAl-home" and "fileA1-work".

In Step b309, the service server performs an operation according to the received user data.

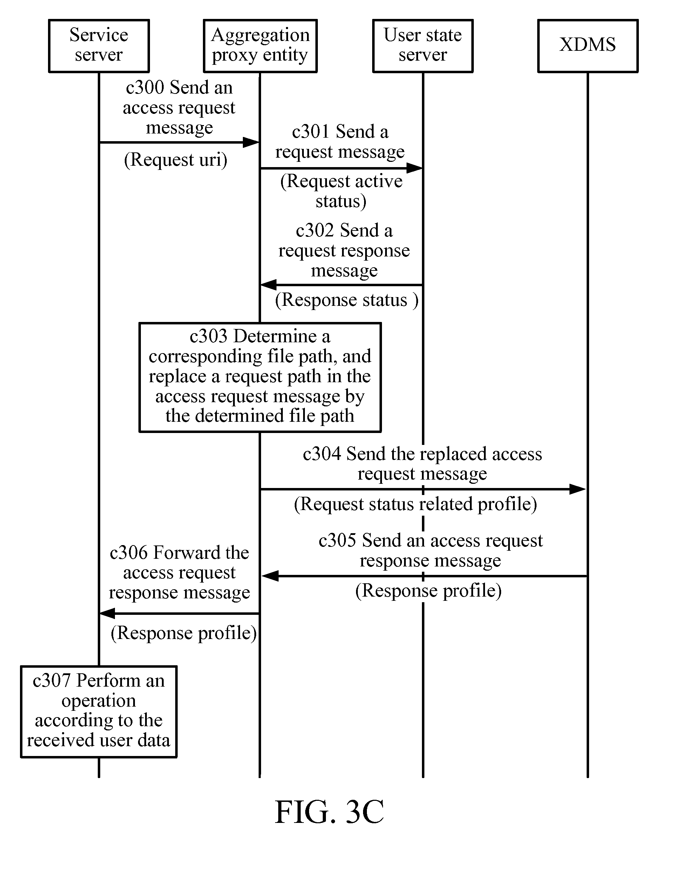

Referring to FIG. 3C, a third method for determining user data according to an embodiment of the present invention includes the following steps.

The functions of the mapping proxy entity in FIG. 3B are realized by an aggregation proxy entity. A corresponding relation between user state information and a file path is preset, and is stored in the aggregation proxy entity. User data is stored in an XDMS.

In Step c300, a service server sends an access request message containing a user ID, an AUID, and a request path to the aggregation proxy entity.

In Step c301, after receiving the access request message, the aggregation proxy entity sends a request message containing the user ID to a user state server.

In Step c302, after receiving the request message, the user state server determines the user state information corresponding to the user ID in the request message, and returns the user state information to the aggregation proxy entity.

In Step c303, the aggregation proxy entity determines a corresponding file path according to the corresponding relation between the user state information and the file path, and replaces the request path in the access request message by the determined file path.

If the user state server stores the corresponding relation between the user state information and the file path, in Step c302, the user state server sends the determined file path to the aggregation proxy entity, and in Step c303, the aggregation proxy entity directly replaces the request path in the access request message by the received file path.

In Step c304, the aggregation proxy entity sends the replaced access request message to the XDMS.

In Step c305-Step c306, after receiving the access request message, the XDMS determines the corresponding user data according to the request path in the message, and sends the user data to the service server through the aggregation proxy entity.

In Step c307, the service server performs an operation according to the received user data.

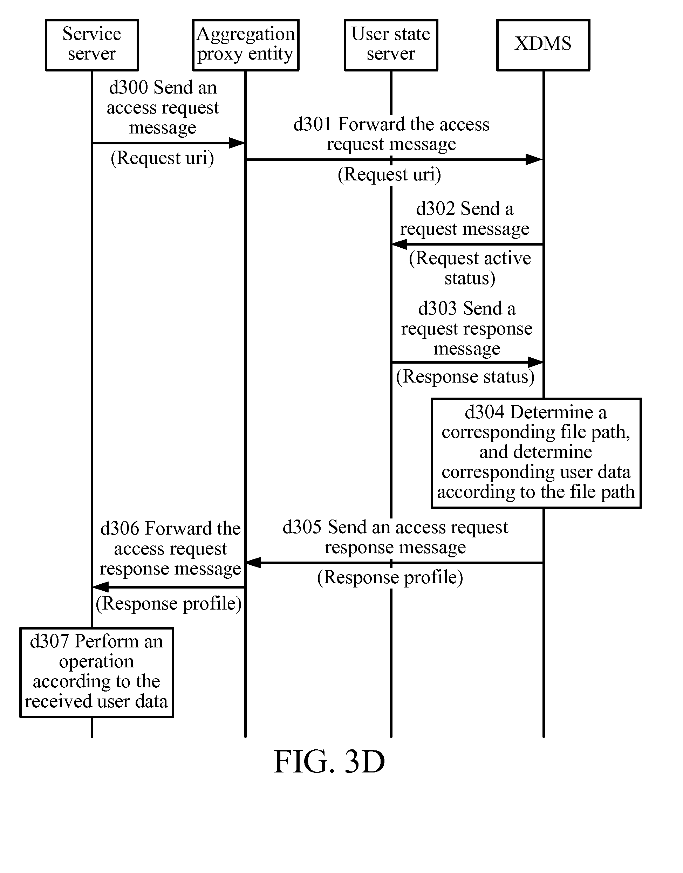

Referring to FIG. 3D, a fourth method for determining user data according to an embodiment of the present invention includes the following steps.

The functions of the mapping proxy entity in FIG. 3B are realized by an XDMS. A corresponding relation between user state information and a file path is preset, and is stored in the XDMS. User data is stored in the XDMS.

In Step d300, a service server sends an access request message containing a user ID, an AUID, and a request path to an aggregation proxy entity.

In Step d301, after receiving the access request message, the aggregation proxy entity sends the message to the XDMS according to a display ID in the message.

In Step d302, after receiving the access request message, the XDMS sends a request message containing the user ID to a user state server.

In Step d303, after receiving the request message, the user state server determines the user state information corresponding to the user ID in the request message, and returns the user state information to the XDMS.

In Step d304, the XDMS determines a corresponding file path according to the corresponding relation between the user state information and the file path, and determines the corresponding user data according to the file path.

If the user state server stores the corresponding relation between the user state information and the file path, in Step d303, the user state server sends the determined file path to the XDMS, and in Step d304, the XDMS directly determines the corresponding user data according to the received file path.

In Step d305-Step d306, the XDMS sends the user data to the service server through the aggregation proxy entity.

In Step d307, the service server performs an operation according to the received user data.

It should be understood by persons skilled in the art that, the modules provided in the present invention are not limited to be disposed in the server or the entity according to the embodiments the present invention, and may be disposed in different servers or entities as required. Further, the present invention is not limited to the step sequences according to the embodiments of the method, and the step sequences may be adjusted as required to achieve the same objective as that of the present invention. The above variations are apparent to persons skilled in the art.

It may be known from the embodiments that in the present invention, the access request message carrying the user ID sent by the service server is received, the corresponding user state information is searched according to the user ID, and the corresponding user data is selected according to the searched user state information, so as to satisfy the demands of the user in different states, thereby improving the user experience.

Through the above description in the detailed description, it is clear to persons skilled in the art that the present invention may be accomplished through hardware, or through software plus a necessary universal hardware platform. Base on this, the technical solutions of the present invention may be embodied in the form of a software product. The software product may be stored in one or more nonvolatile storage media (for example, CD-ROM, USB flash drive, or removable hard disk) and contain several instructions adapted to instruct computer equipment (for example, a personal computer, a server, or network equipment) to perform the method according to the embodiments of the present invention.

Although the present invention has been described through several exemplary embodiments, the invention is not limited to such embodiments. Any modification, equivalent substitution or improvement without departing from the spirit and principle of the present invention should be covered in the scope of protection of the present invention.

## Claims

1. A method for determining user data, comprising:
receiving an access request message carrying a user identity, ID, sent by a service server;
searching for corresponding user state information according to the user ID; and
selecting corresponding user data according to the searched user state information.

2. The method according to claim 1, wherein after the selecting the corresponding user data according to the searched user state information, the method further comprises:
sending a response message carrying the user data to the service server.

3. The method according to claim 1, wherein after the selecting the corresponding user data according to the searched user state information, the method further comprises:
performing, by the service server, an operation according to the user data selected by a management server;
wherein the operation comprises:
determining whether to send a message to a user or whether to provide a service for the user.

4. The method according to claim 1, further comprising:
switching the user state information when a preset switching condition is satisfied, or switching the user state information according to received user switching information.

5. The method according to claim 1, wherein the selecting the corresponding user data according to the searched user state information comprises:
selecting the user data corresponding to the user state information according to a preset corresponding relation between the user state information and the user data.

6. The method according to claim 1, wherein the selecting the corresponding user data according to the searched user state information comprises:
searching for a file path corresponding to the user state according to a preset corresponding relation between the user state information and the file path, and selecting the user data corresponding to the file path.

7. A system for determining user data, comprising a service server, and further comprising:
a management server, adapted to receive an access request message carrying a user identity, ID, sent by the service server, search for corresponding user state information according to the user ID, and select corresponding user data according to the searched user state information.

8. The system according to claim 7, wherein the management server comprises:
a receiving module, adapted to receive the access request message carrying the user ID sent by the service server;
a searching module, adapted to search for the corresponding user state information according to the user ID; and
a selecting module, adapted to select the corresponding user data according to the user state information searched by the searching module.

9. The system according to claim 7, wherein the management server further comprises:
a response module, adapted to send a response message carrying the user data selected by the selecting module to the service server.

10. The system according to claim 7, wherein the service sever comprises:
a processing module, adapted to perform an operation according to the user data selected by the management server;
wherein the operation comprises:
determining whether to send a message to a user or whether to provide a service for the user.

11. The system according to claim 8, further comprising:
a user state server, adapted to switch the user state information when a preset switching condition is satisfied, or switch the user state information according to received user switching information;
wherein the searching module comprises:
a first module, adapted to search for the corresponding user state information through the user state server.

12. The system according to claim 8, wherein the selecting module comprises:
a first storage module, adapted to store a first corresponding relation between the user state information and the user data; and
a user data determination module, adapted to select the user data corresponding to the user state information searched by the searching module according to the first corresponding relation.

13. The system according to claim 8, wherein the selecting module comprises:
a second storage module, adapted to store a second corresponding relation between the user state information and a file path; and
a file path determination module, adapted to search for the file path corresponding to the user state information searched by the searching module according to the second corresponding relation, and select the user data corresponding to the file path.

14. A system for determining user data, comprising a service server, and further comprising:
an aggregation proxy entity, adapted to receive an access request message carrying a user identity, ID, sent by the service server; and
a mapping proxy entity, adapted to search for corresponding user state information according to the user ID, and select corresponding user data according to the searched user state information.

15. The system according to claim 14, wherein the mapping proxy entity comprises:
a searching module, adapted to search for the corresponding user state information according to the user ID; and
a selecting module, adapted to select the corresponding user data according to the user state information searched by the searching module.

16. The system according to claim 14, wherein the mapping proxy entity further comprises:
a response module, adapted to send a response message carrying the user data selected by the selecting module to the service server.

17. The system according to claim 14, wherein the service sever comprises:
a processing module, adapted to perform an operation according to the user data selected by the mapping proxy entity;
wherein the operation comprises:
determining whether to send a message to a user or whether to provide a service for the user.

18. The system according to claim 15, further comprising:
a user state server, adapted to switch the user state information when a preset switching condition is satisfied, or switch the user state information according to received user switching information;
wherein the searching module comprises:
a first module, adapted to search for the corresponding user state information through the user state server.

19. The system according to claim 15, further comprising:
an extensible Markup Language, XML, Document Management Server, XDMS, adapted to store the user data;
wherein the selecting module comprises:
a first storage module, adapted to store a first corresponding relation between the user state information and the user data; and
a user data determination module, adapted to select the user data corresponding to the user state information searched by the searching module from the XDMS according to the first corresponding relation; or
the selecting module comprises:
a second storage module, adapted to store a second corresponding relation between the user state information and a file path; and
a file path determination module, adapted to search for the file path corresponding to the user state information searched by the searching module according to the second corresponding relation, and select the user data corresponding to the file path from the XDMS.

20. The system according to claim 14, wherein the mapping proxy entity is disposed in the aggregation proxy entity.

21. The system according to claim 19, wherein the mapping proxy entity is disposed in the XDMS.

22. A management server, comprising:
a receiving module, adapted to receive an access request message carrying a user identity, ID, sent by a service server;
a searching module, adapted to search for corresponding user state information according to the user ID; and
a selecting module, adapted to select corresponding user data according to the user state information searched by the searching module.

23. The management server according to claim 22, further comprising:
a response module, adapted to send a response message carrying the user data selected by the selecting module to the service server.

24. The management server according to claim 22, wherein the selecting module comprises:
a first storage module, adapted to store a first corresponding relation between the user state information and the user data; and
a user data determination module, adapted to select the user data corresponding to the user state information searched by the searching module according to the first corresponding relation.

25. The management server according to claim 22, wherein the selecting module comprises:
a second storage module, adapted to store a second corresponding relation between the user state information and a file path; and
a file path determination module, adapted to search for the file path corresponding to the user state information searched by the searching module according to the second corresponding relation of the preset corresponding relation between the user state information and the file path, and select the user data corresponding to the file path.
